# EUROPÄISCHE PATENTSCHRIFT

(11) **EP 4 088 074 B1**
(45) Veröffentlichungstag und Bekanntmachung des Hinweises auf die Patenterteilung: **29.11.2023**
(21) Anmeldenummer: 21700359.9
(22) Anmeldetag: 05.01.2021
(51) Int. Cl.: F27B 7/20, C04B 7/12, C04B 7/44, C04B 20/04, F27D 17/00, C04B 7/02

(54) **VORRICHTUNG UND VERFAHREN ZUR THERMISCHEN BEHANDLUNG MINERALISCHER FESTSTOFFE**
APPARATUS AND PROCESS FOR THERMAL TREATMENT OF MINERAL SOLIDS
APPAREIL ET PROCÉDÉ POUR LE TRAITEMENT THERMIQUE DE SOLIDES MINÉRAUX

(30) Priorität: 09.01.2020 DE 102020200186; 09.01.2020 BE 202005011
(43) Veröffentlichungstag der Anmeldung: 16.11.2022
(73) Patentinhaber: thyssenkrupp Polysius GmbH, 59269 Beckum (DE); thyssenkrupp AG, 45143 Essen (DE)
(72) Erfinder: GRUND, Guido, 59457 Werl (DE); WAGNER, Eugen, 59457 Werl (DE); BRINKMANN, Christian, 33611 Bielefeld (DE)
(74) Vertreter: thyssenkrupp Intellectual Property GmbH
(86) Internationale Anmeldenummer: PCT/EP2021/050073
(87) Internationale Veröffentlichungsnummer: WO 2021/140095

(56) Entgegenhaltungen:
- DE-A1-102015 101 237

## Beschreibung

Die Erfindung betrifft ein Verfahren zur Herstellung von farboptimiertem Zementklinker aus Ausgangsstoffen, die natürlicher Tone enthalten.

Zement ist ein hydraulisch erhärtender Baustoff, der aus einem Gemisch fein gemahlener, nichtmetallisch-anorganischer Bestandteile besteht. Er wird in der Regel durch gemeinsames Vermahlen des gebrannten Zementklinkers mit Gips und gegebenfalls weiteren Supplementary Cementing Materials(SCM) hergestellt.

Der Hauptrohstoff für die Klinkerherstellung ist Kalkstein, der in Steinbrüchen abgebaut, in Brechern vorzerkleinert und in das Zementwerk befördert wird. Nach einer Vermahlung und Trocknung wird er mit anderen gemahlenen Komponenten, wie Sand, Ton oder Eisenerz zu einem Rohmehl vermischt. Dieses Rohmehl wird in einem Drehrohrofen bei Temperaturen oberhalb von etwa 1.450 °C zu Klinker gebrannt und dann in einem Kühler auf eine Temperatur von vorzugsweise unter 200°C abgekühlt. Anschließend werden die entstandenen Granalien in einer Mühle, beispielsweise Kugel- oder Rollenmühle, zusammen mit Gips oder Anhydrit zum Zement vermahlen.

Aufgrund des enormen Wachstums der Zementnachfrage in den Entwicklungsländern ist der Anteil der Zementproduktion an den gesamten anthropogenen CO₂-Emissionen stetig gestiegen und wird von einigen Quellen auf etwa 10 % oder etwa 6 % der gesamten anthropogenen Treibhausgase geschätzt. Dies geschah trotz der wichtigen Verbesserungen der Produktionseffizienz und der Bemühungen der Zementindustrie um Emissionsminderung seit den 1970er Jahren (Karen L. Scrivener, Vanderley M. John, Ellis M. Gartner; Eco-efficient cements: Potential economically viable solutions for a low-CO2 cement-based materials industry, United Nations Environment Programme (2017)). Da mehr als etwa die Hälfte der CO₂-Emissionen bei der Klinkerherstellung durch den Rohstoff Kalkstein verursacht werden, kann die Reduzierung des Klinkergehalts (Klinkerfaktor) durch Ersatz einer anderen Komponente einen wesentlichen Beitrag zur Reduzierung dieser Emissionen leisten.

Als Zementersatzstoff beziehungsweise SCM wurde zum Beispiel kalzinierter Ton oder auch natürlich getemperte Puzzolane vorgeschlagen. Als kalzinierter Ton wird ein geeigneter, natürlich vorkommender Ton bezeichnet, der thermisch bei geeigneter Temperatur aktiviert wurde, so dass er puzzolanische Eigenschaften erhält. Hierfür geeignete Tone enthalten im Allgemeinen Tonminerale in Form von 1-Lagen und/oder 2-Lagen Schichtsilikate, zum Beispiel Kaolinit, Illit oder Montmorillonit. Zusätzlich können diese Tone noch Begleitminerale enthalten, wie zum Beispiel Quarz, Feldspäte, Kalzit, Dolomit, aber auch Metalloxide und -hydroxide oder speziell auch Eisenhydroxide. Natürlich vorkommende Tone sind meist eisenreich, und/oder enthalten andere farbgebende Metalle, so dass es bei der herkömmlichen Calcinierung beispielsweise zu einer rötlichen Verfärbung des Produktes kommt. Diese Färbung ist zwar für die Festigkeit und andere Baustoffeigenschaften nicht relevant, wird aber von Anlagenbetreibern und Baustoffkunden als unerwünscht eingestuft. Nach derzeitigem Stand hängt die Akzeptanz eines Baustoffes bei den Endverbrauchern, d.h. das Marktpotenzial der calcinierten Tone und somit das Potential zur möglichen CO₂-Einsparung aber wesentlich von deren Farbe ab.

Die Kalzinierung feinkörniger mineralischer Feststoffe, wie beispielsweise Ton, erfolgt herkömmlicher Weise in Drehrohröfen oder Etagenrostöfen. Hierdurch wird die Einhaltung einer niedrigen Temperatur bei einer für die Behandlung bei diesem Verfahren notwendigen Verweilzeit gewährleistet. So beschreibt die US 4,948,362 A ein Verfahren zur Kalzinierung von Ton, bei welchem Kaolinton zur Erhöhung des Glanzes und zur Minimierung der Abrasivität in einem Etagenröstofen mit Hilfe eines heißen Kalzinierungsgases behandelt wird. In einem elektrostatischen Filter wird das kalzinierte Tonpulver von dem Abgas des Kalzinierungsofens getrennt und weiterverarbeitet, um das gewünschte Produkt zu erhalten.

Vor dem Hintergrund der globalen Minderung der CO₂-Emissionen rücken Stoffe, die zur Festigkeitsentwicklung in Zement und/oder im Beton beitragen und bei deren Herstellung weniger CO₂ als in Zementklinkerbrennprozess freigesetzt wird, immer mehr in den Fokus. Natürliche Tone und/oder Zeolithe, welche einer thermischen Behandlung (Calcination) unterzogen werden, scheinen hierbei ein vielversprechendes Potenzial zu besitzen.

So ist aus der DE 10 2008 020 600 A1 ein Verfahren zur Calcinierung von Ton oder Gips bekannt, wobei die Feststoffe durch einen Flash-Reaktor hindurchgeführt werden, in welchem sie bei einer Temperatur von 450 bis 1.500 °C mit heißen Gasen in Kontakt gebracht werden. Die Feststoffe werden anschließend bei einer Temperatur von 500 bis 850 °C durch einen Verweilzeitreaktor geführt und dann gegebenfalls einer weiteren Behandlungsstufe zugeführt.

Aus der DE 10 2008 031 165 A1 ist es bekannt, zur Herstellung von kalziniertem Ton die Anlage zur Erzeugung des Zements selbst einzusetzen, wobei wenigstens zwei Vorwärmstränge vorgesehen sind, von welchen einer dem Vorwärmen des Tons und der andere der Erwärmung von Klinkerrohmaterial dient. In einer Brennkammer werden Heißgase erzeugt, die der Kalzinierung des Tons dienen und im Gegenstrom zu den Feststoffen durch die Vorwärmstufen geführt werden. Der bei diesen Verfahren eingesetzte Ton weist jedoch einen hohen Kaolinitgehalt von mehr als 40 Gew.-% auf und ist sehr teuer, so dass hieraus kein wirtschaftlich vermarktbarer Klinkerersatz hergestellt werden kann.

Die DE 690 10 646 T2 betrifft aus Bauxit hergestellte keramische Mikrosphären und die Verwendung dieser Mikrosphären als Verstärkungsmaterialien und funktionelle Füllstoffe. Das als Quelle der Mikrosphären vorgeschlagene Bauxit umfasst 55 bis 63 % Aluminiumoxid und 7 bis 13 % Siliziumdioxid, wobei das Siliziumdioxid im Wesentlichen als Kaolinit vorliegt. Üblicherweise umfasst die Mineralogie 30 bis 50 % Gipsit mit 15 bis 45 % Böhmit, 16 bis 27 % Kaolinit mit weniger als 0,2 % Quarz sowie 6 bis 10 % Oxide von Eisen und 3 bis 5 % Titanoxide. Im Labormaßstab erfolgt eine Kalzinierung bei etwa 900 °C, um Wasser auszutreiben. Anschließend wird der Ofen auf etwa 1.300 °C erwärmt, bevor das Material abgekühlt und dann schnell auf eine Sintertemperatur zwischen 1.300 °C und 1.600 °C gebracht und gebrannt wird.

In der US 3 941 872 A wird Ton zunächst unter reduzierenden und anschließend unter oxidieren Bedingungen wärmebehandelt, um kalzinierten Ton mit einer gewünschten Helligkeit herzustellen.

Die DE 10 2011 014 498 A1 offenbart ein Verfahren zur Herstellung eines Klinkerersatzstoffes für die Verwendung bei der Zementherstellung, wobei ein auf eine Korngröße von < 2 mm zerkleinerter Ton zunächst bei einer Temperatur von 600 bis 1.000 °C kalziniert wird. Durch eine anschließende reduzierende Behandlung bei Temperaturen von 600 bis 1.000 °C mit einem CO-haltigen Gas erfolgt eine Umfärbung des roten, kalzinierten Tons in grauen kalzinierten Ton.

In der WO 2012/082683 A1 hat man sich zur Aufgabe gestellt, synthetische Puzzolane mit gewünschten Farbeigenschaften, insbesondere einem leichten Grauton, herzustellen. Als Lösung wird angegeben, dass ein Rohmaterial, welches zur Bildung eines amorphen Aluminiumsilikats geeignet ist, bis zu einer Aktivierungstemperatur erwärmt wird, bei der das Rohmaterial in synthetisches Puzzolan umgewandelt wird. Anschließend wird das synthetische Puzzolan von der Aktivierungstemperatur bis auf eine Temperatur abgekühlt, bei der es farbstabil ist. Dieser Abkühlprozess findet dabei zumindest zu Teilen unter reduzierenden Bedingungen statt. Als Ergebnis erhält man dann ein Puzzolan mit dem gewünschten Grauton.

Aus der DE 10 2014 116 373 A1 ist ein Verfahren zur Wärmebehandlung von natürlichen Tonen und/oder Zeolithen bekannt, wobei dreiwertiges Eisen zumindest teilweise im zweiwertiges Eisen überführt wird und/oder im Ausgangsmaterial vorhandenes zweiwertiges Eisen in dieser Wertigkeitsstufe verbleibt.

Aus der US 9,458,059 B2 ist ein Verfahren zur Herstellung von synthetischem Puzzolan bekannt, wobei wenn der Kühlung die Atmosphäre CO aufweisen kann.

Aus der DE 10 2015 101 237 A1 ist ein Verfahren zur Wärmebehandlung von feinkörnigem oder pulverförmigen Material bekannt.

Es ist somit üblich zur Farboptimierung während der thermischen Behandlung, beispielsweise während der Calcination, reduzierend wirkende Gaskomponenten, beispielsweise Kohlenmonoxid (CO), Wasserstoff (H₂), Kohlenstoff und/oder /Kohlenwasserstoffe zuzugeben. Diese wirken reduzieren auf die MetalloxidVerbindungen in den Tonen und reduzieren diese zumindest teilweise, sodass eine unerwünschte Rotfärbung des Produktes vermindert beziehungsweise unterbunden und/oder eine Graufärbung Produktes erreicht wird.

Um eine effektive und weiterreichende Farboptimierung zu ermöglichen ist es erforderlich, dass auch noch zum Ende des Prozessschrittes thermischen Behandlung, beispielsweise der Calcination und Farboptimierung reduzierend wirkende Gaskomponenten vorhanden sind. Somit sind diese reduzierend wirkenden Gaskomponenten im Abgas der Anlage vorhanden. Diese können jedoch nicht einfach an die Umwelt abgegeben werden. Daher muss das Abgas der Anlage nachbehandelt werden. Diese erfolgt üblicherweise in einer Nachverbrennung, die dadurch erzeugte Energie, beispielsweise in Wärmetauschern, zurückgewonnen. Außerdem muss die Verbrennung bei ausreichend hohen Temperaturen und für ausreichend lange Zeit durchgeführt werden, um sicherzustellen, dass keine schädlichen Substanzen an die Umwelt abgegeben werden. Hierzu ist üblicherweise die weitere Zugabe von Brennmitteln notwendig. Dieses Verfahren ist jedoch aufwendig und erzeugte Energie kann nur begrenzt mit vertretbarem Aufwand genutzt werden.

Aufgabe der Erfindung ist es, eine Vorrichtung zur thermischen Behandlung von Tonen mit Farboptimierung bereitzustellen, bei welcher eine sichere Entfernung schädliche Komponenten im Abgas der Prozessstufe mit Farboptimierung, beispielsweise Kohlenmonoxid oder Kohlenwasserstoffe, erfolgt und gleichzeitig die dabei erzeugte Energie möglichst effizient in den Gesamtprozess eingebracht wird.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Eine Vorrichtung zur Durchführung des erfindungsgemäßen Verfahrens dient zur thermischen Behandlung mineralischer Feststoffe, insbesondere natürlicher Tone. Insbesondere handelt es sich um Feststoffen, welche Gehalte an Eisen, Mangan, Chrom oder anderen farbgebenden Metallverbindungen aufweisen, die als eigenständige Mineralphasen und/oder eingelagert in Mineralphasen des Tons vorliegen können. Die Vorrichtung weist wenigstens einen Vorwärmer und einen Flugstromreaktor auf. Der Flugstromreaktor wird mit einer für farbgebende Metallverbindungen, insbesondere Metallchalkogenide, insbesondere Metalloxide, Metallhydroxide, Metallhalogenide sowie Verbindungen mit verschiedenen dieser Anionen, reduzierend wirkenden Atmosphäre betrieben, um eine Farboptimierung der verwendeten Rohmaterialien bei der thermischen Behandlung zu erzielen. Beispielsweise und bevorzugt ist der Flugstromreaktor für den Einsatz von Wasserstoff, Kohlenmonoxid, Kohlenwasserstoffe, Erdgas, Öl oder Kohle ausgelegt. Am Ausgang des Flugstromreaktors ist eine Abscheidevorrichtung angeordnet, in der der Feststoff weitgehend von der Gasphase abgetrennt wird.

Der Flugstromreaktor dient der Farboptimierung, in dem bevorzugt ebenfalls die thermische Behandlung, insbesondere die thermische Aktivierung des mineralischen Feststoffes, insbesondere des Tones, erfolgen kann. Die Farboptimierung kann der thermischen Behandlung auch nachgeschaltet sein. Der Flugstromreaktor weist eine Reduktionsmittelzuführung auf. Die Reduktionsmittelzuführung kann ein Reduktionsmittel, beispielsweise Wasserstoff, direkt über eine Zuführvorrichtung zuführen. Alternativ oder zusätzlich kann die Reduktionsmittelzuführung auch eine Verbrennungsvorrichtung sein, in der mehr Brennstoff zugeführt wird, als Sauerstoff für den Verbrennungsprozess vorhanden ist. Hierdurch werden reduzierende Bestandteile, beispielsweise Kohlenmonoxid vor Ort erzeugt. Ebenso können beispielsweise Kohlenwasserstoffverbindungen, beispielsweise Methan, welches im Überschuss zugeführt wird auch direkt mit den Metallverbindungen reagieren und diese so reduzieren. In diesem Fall führt die Reduktionsmittelzuführung das Reduktionsmittel direkt über eine Zuführvorrichtung zu, ist aber auch gleichzeitig eine Verbrennungsvorrichtung.

Um natürliche Tone zu einem möglichst farblosen Produkt zu verarbeiten weist beispielsweise der Flugstromreaktor eine auf farbgebende Metalloxide reduzierend wirkende Atmosphäre auf. Unter "farbloses Produkt" wird im Sinne der Erfindung verstanden, dass das Produkt keine Farbigkeit, beispielsweise eine Rotfärbung aufweist, sondern ein weißes oder graues Erscheinungsbild hat. Unter "reduzierender Atmosphäre" wird im Sinne der Erfindung verstanden, dass Gas- oder Brennstoffbestandteile aufweist, welche reduzierend sind, Insbesondere und bevorzugt sind die Gas- oder Brennstoffbestandteile nicht vollständig ausgebrannt, also zum Beispiel noch Kohlenwasserstoffe, Kohlenmonoxid, Wasserstoff oder noch Öl oder Kohle aber kein oder sehr wenig Sauerstoff im Gas enthält. Diese können der Gasphase, die dem Flugstromreaktor zugeführt wird, bereits enthalten sein, der Gasphase gezielt zugesetzt werden oder durch eine gezielt unvollständige Verbrennung von Erdgas, Öl, Kohle, Biomasse oder anderen Brennstoffen beispielsweise im Brenner oder auch im Flugstromreaktor erzeugt werden. Hierdurch enthält der Gasstrom, welche die nachgeschaltete Abscheidevorrichtung verlässt diese reduzieren Verbindungen, das heißt Wasserstoff, Kohlenmonoxid und/oder Kohlenwasserstoffe in Konzentrationen, die als umweltschädlich erachtet werden. Der Gasstrom enthält natürlich neben den reduzierenden Verbindungen (reduzierenden Bestandteilen) inerte Komponenten, insbesondere Stockstoff (N₂) und Kohlendioxid (CO₂).

Daher ist am Ausgang des Gasstromes der Abscheidevorrichtung eine thermische Behandlungszone angeordnet, in der beispielsweise und insbesondere die unvollständig ausgebrannten Bestandteile annähernd vollständig ausgebrannt werden. Der Ausgang der thermischen Behandlungszone ist mit dem Eingang für den Gasstrom des Vorwärmers verbunden. In der thermischen Behandlungszone werden natürlich nur die reduzierenden Bestandteile oxidiert, die inerten Bestandteile (Komponenten) bleiben unverändert.

Vorteil der Anordnung der thermischen Behandlungszone an dieser Stelle ist, dass die Gase zu diesem Zeitpunkt eine vergleichsweise hohe Temperatur aufweisen, beispielsweise 800 °C oder mehr. Üblicherweise übersteigen die Gase zu diesem Zeitpunkt eine Temperatur von 1200 °C jedoch nicht. Somit haben die Gase in etwa die Temperatur, die zur sicheren Verbrennung dieser Stoffe, welche nicht an die Umwelt abgegeben werden sollen, notwendig ist. Hierdurch kann erspart werden, dass der Abgasstrom nach einer Entstaubung erneut auf eine so hohe Temperatur aufgeheizt werden muss und anschließend diese Wärme wieder zurückgewonnen werden muss. Gleichzeitig wird hierdurch die gewonnene Wärmeenergie auf diesem hohen Temperaturniveau gewonnen und genutzt und direkt im Vorwärmer an den Strom des Rohmaterials abgegeben.

Die thermische Behandlungszone weist zur Umsetzung der noch im Gasstrom befindlichen reduzierenden Bestandteile mindestens eine zweite Zuführungsvorrichtung für Sauerstoff auf. In der thermischen Behandlungszone erfolgt somit die Reaktion des durch die Reduktionsmittelzuführung zugeführten Reduktionsmittel mit dem in der thermischen Behandlungszone zugeführten Sauerstoff.

Bevorzugt sind Tone, welche Tonminerale in Form von 1-Lagen- und/oder 2-Lagen-Schichtsilikate, zum Beispiel Kaolinit, Illit oder Montmorillonit enthalten. Zusätzlich können diese Tone noch Begleitminerale enthalten, wie zum Beispiel Quarz, Feldspäte, Kalzit, Dolomit, aber auch Metalloxide und -hydroxide oder speziell auch Eisenhydroxide.

In einer weiteren Ausführungsform der Erfindung weist die Vorrichtung zusätzlich beispielsweise eine Trocknungseinheit auf, welche das Rohmaterial zunächst trocknet, sofern auch Rohmaterial verarbeitet werden soll, welches eine zu hohe Feuchte aufweist. Weiter kann die Vorrichtung zusätzlich beispielsweise eine Zerkleinerungsvorrichtung, beispielsweise eine Mühle, aufweisen, um Rohmaterial weiter zu zerkleinern, sofern dieses nicht in der notwendigen Feinheit bereits angeliefert wird oder in der Lagerung zur Aggregation neigen kann. Des Weiteren kann die Vorrichtung zusätzlich eine Kühlvorrichtung aufweisen, welche das aus dem Flugstromreaktor austreten Produkt kühlt. Beispielsweise bevorzugt kann diese Kühlung zweistufig ausgeführt sein. Beispielsweise und bevorzugt kann die Kühlung, zumindest teilweise, unter inerten Bedingungen erfolgen.

In einer weiteren Ausführungsform der Erfindung ist die Vorrichtung ein Bestandteil einer Anlage zur Herstellung von Zementklinker. Die Anlage zur Herstellung von Zementklinker kann zusätzlich beispielsweise eine Trocknungseinheit aufweisen, welche das Rohmaterial zunächst trocknet, sofern auch Rohmaterial verarbeitet werden soll, welches eine zu hohe Feuchte aufweist. Weiter kann die Anlage zur Herstellung von Zementklinker zusätzlich beispielsweise eine Zerkleinerungsvorrichtung, beispielsweise eine Mühle, aufweisen, um Rohmaterial weiter zu zerkleinern, sofern dieses nicht in der notwendigen Feinheit bereits angeliefert wird oder in der Lagerung zur Aggregation neigen kann. Des Weiteren kann die Anlage zur Herstellung von Zementklinker zusätzlich eine Kühlvorrichtung aufweisen, welche das aus dem Flugstromreaktor austreten Produkt kühlt. Beispielsweise wird diese Kühlung zweistufig oder mehrstufig ausgeführt, wobei mindestens in der ersten Kühlstufe die Kühlung unter inerten oder reduzierten Bedingungen, also ohne beziehungsweise vernachlässigbar kleinem Sauerstoffanteil im vom Produkt umgebenen Gas, abläuft.

In einer weiteren Ausführungsform der Erfindung ist die thermische Behandlungszone zylindrisch ausgeführt.

In einer weiteren Ausführungsform der Erfindung ist die thermische Behandlungszone rohrförmig senkrecht oberhalb der Abscheidevorrichtung angeordnet. Um die notwendige Verweilzeit in der thermischen Behandlungszone zu realisieren, und um eine sichere Verbrennung der reduzieren Verbindungen zu erreichen, weist die thermische Behandlungszone beispielsweise eine Länge von 5 m bis 50 m, bevorzugt von 10 m bis 40 m, auf. Bei den für solche Anlagen üblichen Strömungsgeschwindigkeiten der Gase wird so eine Verweilzeit von wenigen Sekunden ermöglicht. Hierdurch ergibt sich eine sichere Verbrennung der reduzieren Verbindungen.

In einer weiteren Ausführungsform der Erfindung weist die thermische Behandlungszone mindestens eine erste Zuführungsvorrichtung für einen Brennstoff auf. Die Art der ersten Zuführungsvorrichtung ist von der Art des Brennstoffs abhängig. Als Brennstoff können feste Brennstoffe, flüssige Brennstoffe sowie gasförmige Brennstoffe verwendet werden. Beispiel für einen gasförmigen Brennstoff ist Erdgas, Beispiel für einen flüssigen Brennstoff ist Öl und ein Beispiel für einen festen Brennstoff ist Kohlenstaub. Die die thermische Behandlungszone kann mehrere erste Zuführungsvorrichtungen für einen Brennstoff aufweisen. Hierdurch ist eine bessere Vergleichmäßigung möglich.

In einer weiteren Ausführungsform der Erfindung weist die thermische Behandlungszone mindestens eine zweite Zuführungsvorrichtung für Sauerstoff auf. Der Sauerstoff kann in Form von reinen Sauerstoff zugeführt werden, dieses wird jedoch aus Kostengründen meistens vermieden. Der Sauerstoff kann in Form von Luft zugeführt werden. Als weitere Sauerstoffquelle kann auch Abgas verwendet werden, welches zwar einen reduzierten Sauerstoffgehalt aufweist, dafür aber bereits erwärmt ist. Die die thermische Behandlungszone kann mehrere zweite Zuführungsvorrichtungen für Sauerstoff aufweisen. Hierdurch ist eine bessere Vergleichmäßigung möglich.

In einer weiteren Ausführungsform der Erfindung ist die zweite Zuführungsvorrichtung zur Zuführung von Sauerstoff unter erhöhtem Druck ausgebildet. Hierdurch wird eine bessere Durchmischung im Inneren der thermischen Behandlungszone erreicht.

In einer weiteren Ausführungsform der Erfindung weist die thermische Behandlungszone eine zweite Zuführungsvorrichtung auf, mit der der Sauerstoff beziehungsweise die Luft unter erhöhtem Druck gegenüber dem Innendruck der thermischen Behandlungszone der thermischen Behandlungszone zugeführt wird, um so eine Vermischung des zugeführten Sauerstoffs mit dem Gas innerhalb der thermischen Behandlungszone sicherzustellen. Der erhöhte Druck kann beispielsweise und insbesondere mittels Ventilator oder Kompressor erzeugt werden. Es kann Luft auch in Form von Druckluft bereitgestellt werden.

Besonders bevorzugt weist die thermische Behandlungszone sowohl eine erste Zuführungsvorrichtung für einen Brennstoff als auch eine zweite Zuführungsvorrichtung für Sauerstoff auf. Hierdurch ist optimal möglich, die Temperaturbedingungen für eine sichere und zuverlässige Verbrennung der reduzieren Gase sicher einzustellen. Des Weiteren ist es möglich beispielsweise Umgebungsluft bei Umgebungstemperatur zu verwenden, wobei die benötigte Energie zur Erwärmung durch den Brennstoff bereitgestellt wird.

In einer weiteren Ausführungsform der Erfindung ist der Vorwärmer als Zyklonvorwärmer, insbesondere als mindestens zweistufiger Zyklonvorwärmer, ausgeführt.

Die Erfindung betrifft ein Verfahren zur thermischen Behandlung von mineralischem Material, insbesondere zur Herstellung von natürlich getemperten Puzzolanen. Als mineralisches Material wird ein Material ausgewählt, welches farbgebende Metallverbindungen, insbesondere Eisenverbindungen und/oder Chromverbindungen, aufweist. Das Verfahren weist die folgenden Schritte auf:
a) Vorwärmen eines mineralischen Materials in einem Vorwärmer,
b) Überführen des im Vorwärmer erwärmten mineralischen Materials in den Flugstromreaktor,
c) Thermisches Behandeln des mineralischen Materials in einem Flugstromreaktor in einer reduzierenden Atmosphäre zur Reduktion der farbgebenden Metallverbindungen während der thermischen Behandlung,
d) Trennen des Feststoff-Gas-Gemisches, welches aus dem Flugstromreaktor kommt in einer Abscheidevorrichtung.

Erfindungsgemäß weist das Verfahren zusätzlich die folgenden Schritte auf:
e) Oxidieren der reduzierenden Bestandteile des aus der Abscheidevorrichtung kommenden Gases in einer thermischen Behandlungszone mit Hilfe von in der thermischen Behandlungszone zugeführtem Sauerstoff,
f) Zuführen des aus der thermischen Behandlungszone austretenden Gases in den Vorwärmer. Hierdurch wird die in der thermischen Behandlungszone gewonnene thermische Energie genutzt und auf das mineralische Material im Vorwärmer übertragen.

Vorteil des erfindungsgemäßen Verfahren ist, dass die durch die Oxidation der reduzierenden Bestandteile des Gasstromes gewonnene Energie direkt und unmittelbar im Vorwärmer an das Rohmaterial abgegeben wird und somit vollständig im Prozess verwendet wird.

Die reduzierende Atmosphäre in Schritt c) weist beispielsweise und bevorzugt als reduzierende Komponente Kohlenmonoxid (CO), Wasserstoff (H2), Kohlenstoff und/oder Kohlenwasserstoffe auf. Üblicherweise weist die Atmosphäre auch Inertgas, insbesondere Stickstoff (N₂) und Kohlendioxid (CO₂) auf. Die reduzierenden Komponenten dienen insbesondere dazu, farbgebende Metallverbindungen im mineralischen Feststoff auf eine geringe Oxidationsstufe zu reduzieren und so die Farbgebung zu optimieren.

Das Trennen des Feststoff-Gas-Gemisches, welches aus dem Flugstromreaktor kommt, erfolgt bevorzugt in einer Abscheidevorrichtung, welche als Zyklonabscheider ausgebildet ist.

In einer weiteren Ausführungsform der Erfindung erfolgt das Oxidieren in Schritt e) bei einer Temperatur von 700 °C bis 1.000 °C und über einen Zeitraum von 1 s bis 10 s.

In einer weiteren Ausführungsform der Erfindung wird in Schritt e) ein Brennstoff dem Gas zugeführt. Die Art des Brennstoffs kann unterschiedlich sein. Als Brennstoff können feste Brennstoffe, flüssige Brennstoffe sowie gasförmige Brennstoffe verwendet werden. Beispiel für einen gasförmigen Brennstoff ist Erdgas, Beispiel für einen flüssigen Brennstoff ist Öl und Beispiel für einen festen Brennstoff ist Kohlenstaub.

In einer weiteren Ausführungsform der Erfindung wird in Schritt e) Sauerstoff dem Gas zugeführt. Der Sauerstoff kann in Form von reinen Sauerstoff zugeführt werden, dieses wird jedoch aus Kostengründen meistens vermieden. Der Sauerstoff kann in Form von Luft zugeführt werden. Als weiterer Sauerstoffquelle kann auch Abgas verwendet werden welches zwar einen reduzierten Sauerstoffgehalt aufweist, dafür aber bereits erwärmt ist. Diese Gaszuführung kann unter erhöhtem Druck erfolgen.

In einer weiteren Ausführungsform der Erfindung wird der Materialstrom des mineralischen Materials um die thermische Behandlungszone herumgeführt.

Nachfolgend ist eine Vorrichtung zur Durchführung des erfindungsgemäßen Verfahrens anhand eines in den Zeichnungen dargestellten Ausführungsbeispiels näher erläutert.

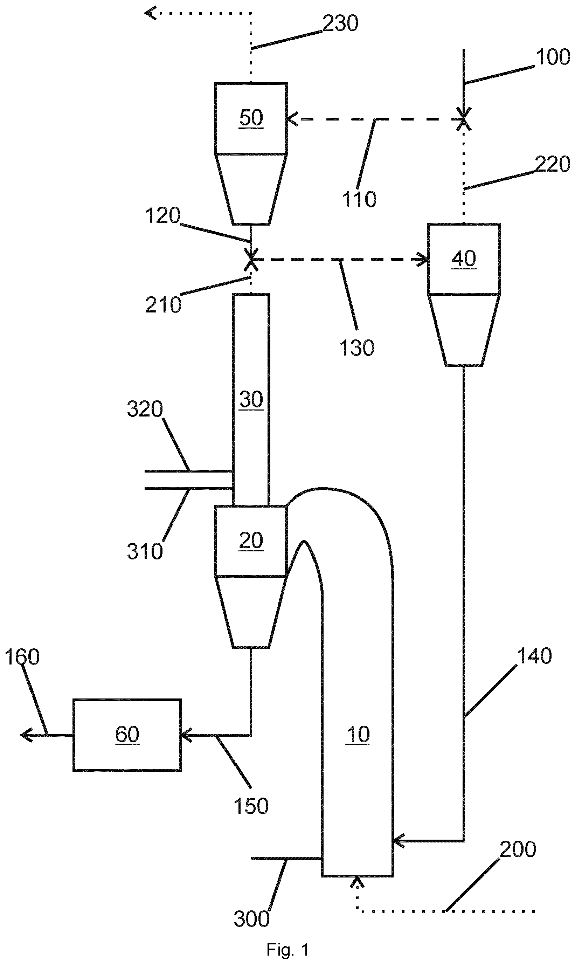

### Fig. 1 schematische Ansicht der Vorrichtung

In Fig. 1 ist die Vorrichtung beispielhaft gezeigt. Die Vorrichtung weist einen Flugstromreaktor 10, eine Abscheidevorrichtung 20, eine thermische Behandlungszone 30, einen ersten Vorwärmzyklon 40, einen zweiten Vorwärmzyklon 50 und einen Kühler 60 auf.

Am Anfang wird das Rohmaterial 100 zugegeben. Dieses kann beispielsweise vorher getrocknet und gemahlen worden sein, bevor es hier die Vorrichtung eingebracht wird. Das Rohmaterial 100 wird mit dem leicht abgekühlten Gasstrom 220 vermischt, welcher aus dem ersten Vorwärmzyklon 40 stammt. In der ersten Vorwärmstufe 110 überträgt der Gasstrom die Wärme auf das Rohmaterial. Im zweiten Vorwärmzyklon 50 erfolgt eine Trennung des Gasstromes vom Feststoff. Das vorgenannte Rohmaterial 120 wird anschließend mit den Brenngasen 210, welche aus der thermischen Behandlungszone 30 kommen, gemischt. In der zweiten Vorwärmstufe 130 gibt der Gasstrom seine Wärme an das Rohmaterial ab. Anschließend wird im ersten Vorwärmzyklon 40 erneut der Feststoff von dem Gasstrom getrennt. Das erwärmte Rohmaterial 140 wird dem Flugstromreaktor 10 zugeführt. Im Flugstromreaktor 10 erfolgt die thermische Umsetzung des Rohmaterials zum Produkt sowie die Farboptimierung des Produkts. Zur Farboptimierung wird über die Reduktionsmittelzuführung 300 beispielsweise Kohlenstoff, Wasserstoff oder Erdgas zugeführt. Anschließend wird in der Abscheidevorrichtung 20 welche ebenfalls als Zyklon ausgeführt ist, der Feststoff vom Gasstrom getrennt. Das heiße Produkt 150 wird in den Kühler 60 geführt dort abgekühlt und kann als Produkt 160 entnommen werden. Kühler 60 kann beispielsweise mehrstufig, insbesondere zweistufig, ausgeführt sein, beispielsweise kann der Kühler 60 ein Fließbettkühler, ein Wanderbettkühler, eine Kühlschnecke, ein Zyklonkühler, ein Wirbelschichtkühler, ein Trommelkühler sein oder diesen aufweisen.

Der Gasstrom 200 wird dem Flugstromreaktor 10 zugeführt. Beispielsweise kann hier ein Brenner für die notwendige Temperatur sorgen. Dieser Brenner kann beispielsweise so betrieben werden, dass dieser beispielsweise Kohlenmonoxid (CO) erzeugt und so reduzierende Bestandteile in den Gasstrom einbringt. Ebenso können auf diese Weise beispielsweise Kohlenwasserstoffe oder Wasserstoff, beispielsweise als nicht umgesetzte Brenngase, eingebracht werden. Alternativ oder zusätzlich kann ein weiterer Brenner angeordnet sein. Der Gasstrom trägt den Feststoff durch den Flugstromreaktor 10 und wird in der Abscheidevorrichtung 20 vom Feststoff getrennt. Von der Abscheidevorrichtung 20 gelangt der Gasstrom im gezeigten Beispiel direkt und unmittelbar in die thermische Behandlungszone 30, welche senkrecht oberhalb der Abscheidevorrichtung 20 angeordnet ist. Die thermische Behandlungszone 30 weist im gezeigten Beispiel eine erste Zuführung für Brennstoff 310 und eine zweite Zuführung für Sauerstoff 320 auf. Hierdurch erfolgt eine vollständige Verbrennung der im Gasstrom enthaltene reduzierenden Bestandteile, beispielsweise Wasserstoff (H₂), Kohlenmonoxid (CO) oder Kohlenwasserstoffe. Gleichzeitig wird der Gasstrom durch die freiwerdende Verbrennungsenergie vorzugsweise erwärmt, beziehungsweise Wärmeverluste, zum Beispiel durch Abgabe an die Umgebung oder durch die Zuführung von weiteren insbesondere kalten Komponenten, zum Beispiel Luft, ausgeglichen. Der Gasstrom tritt als heißes Brenngas 210 aus und wird mit dem vorgewärmt Rohmaterial 120 vermischt und in die zweite Vorwärmstufe 130 geführt. Anschließend wird der Gasstrom von Feststoff in dem ersten Vorwärmzyklon 40 getrennt und der leicht abgekühlte Gasstrom 220 mit dem Rohmaterial 100 vermischt und in die erste Vorwärmstufe 110 geführt, in der die Restwärme des Gasstromes an den Feststoff übertragen wird. Anschließend erfolgt die Abtrennung des Feststoffes aus dem Gasstrom in dem zweiten Vorwärmzyklon 50. Aus dem zweiten Vorwärmzyklon 50 dritte abgekühlt Gasstrom 230 aus.

### Bezugszeichen

- 10: Flugstromreaktor
- 20: Abscheidevorrichtung
- 30: thermische Behandlungszone
- 40: erster Vorwärmzyklon
- 50: zweiter Vorwärmzyklon
- 60: Kühler
- 100: Rohmaterial
- 110: erste Vorwärmstufe
- 120: vorgewärmtes Rohmaterial
- 130: zweite Vorwärmstufe
- 140: erwärmtes Rohmaterial
- 150: heißes Produkt
- 160: Produkt
- 200: Gasstrom
- 210: Brenngase
- 220: leicht abgekühlter Gasstrom
- 230: abgekühlter Gasstrom
- 300: Reduktionsmittelzuführung
- 310: Brennstoff
- 320: Sauerstoff

## Patentansprüche

1. Verfahren zur thermischen Behandlung von mineralischem Material, wobei als mineralisches Material ein Material ausgewählt wird, welches farbgebende Metallverbindungen, insbesondere Eisenverbindungen und/oder Chromverbindungen, aufweist, wobei das Verfahren die folgenden Schritte aufweist:
a) Vorwärmen eines mineralischen Materials in einem Vorwärmer,
b) Überführen des im Vorwärmer erwärmten mineralischen Materials in den Flugstromreaktor (10),
c) Thermisches Behandeln des mineralischen Materials in einem Flugstromreaktor (10) in einer reduzierenden Atmosphäre zur Reduktion der farbgebenden Metallverbindungen während der thermischen Behandlung,
d) Trennen des Feststoff-Gas-Gemisches, welches aus dem Flugstromreaktor (10) kommt in einer Abscheidevorrichtung (20),
**dadurch gekennzeichnet, dass** das Verfahren zusätzlich die folgenden Schritte aufweist:
e) Oxidieren der reduzierenden Bestandteile des aus der Abscheidevorrichtung (20) kommenden Gases in einer thermischen Behandlungszone (30) zwischen dem Ausgang des Gasstromes der Abscheidevorrichtung (20) und dem Eingang für den Gasstrom des Vorwärmers mit Hilfe von zugeführtem Sauerstoff (320),
f) Zuführen des aus der thermischen Behandlungszone (30) austretenden Gases in den Vorwärmer und dadurch Nutzung der in der thermischen Behandlungszone (30) gewonnenen thermischen Energie durch Übertragung auf das mineralische Material.

2. Verfahren nach Anspruch 1, **dadurch gekennzeichnet, dass** das Oxidieren in Schritt e) bei einer Temperatur von 700 °C bis 1.000 °C und über einen Zeitraum von 1 s bis 10 s erfolgt.

3. Verfahren nach einem der Ansprüche 1 bis 2, **dadurch gekennzeichnet, dass** in Schritt e) ein Brennstoff (310) dem Gas zugeführt wird.

4. Verfahren nach einem der Ansprüche 1 bis 3, **dadurch gekennzeichnet, dass** der Materialstrom des mineralischen Materials um die thermische Behandlungszone (30) herum geführt wird.

## Claims

1. A process for thermally treating mineral material, the mineral material selected being a material which comprises coloring metal compounds, more particularly iron compounds and/or chromium compounds, and the process comprising the following steps:
a) preheating a mineral material in a preheater,
b) transferring the mineral material heated in the preheater to the entrained flow reactor (10),
c) thermally treating the mineral material in an entrained flow reactor (10) in a reducing atmosphere for reducing the coloring metal compounds during the thermal treatment,
d) separating the solid/gas mixture coming from the entrained flow reactor (10) in a separating apparatus (20),
**characterized in that** the process additionally comprises the following steps:
e) oxidizing the reducing constituents of the gas coming from the separating apparatus (20) in a thermal treatment zone (30) between the outlet of the gas stream of the separating apparatus (20) and the inlet for the gas stream of the preheater by means of supplied oxygen (320),
f) supplying the gas emerging from the thermal treatment zone (30) to the preheater and thereby utilizing the thermal energy recovered in the thermal treatment zone (30), by transfer to the mineral material.

2. The process as claimed in claim 1, **characterized in that** the oxidizing in step e) takes place at a temperature of 700°C to 1000°C and over a period of 1 s to 10 s.

3. The process as claimed in either of claims 1 and 2, **characterized in that** in step e) a fuel (310) is supplied to the gas.

4. The process as claimed in any of claims 1 to 3, **characterized in that** the flow of the mineral material is guided around the thermal treatment zone (30).

## Revendications

1. Procédé de traitement thermique d'une matière minérale, la matière minérale choisie étant une matière qui comprend des composés métalliques colorants, plus particulièrement des composés de fer et/ou des composés de chrome, et le procédé comprenant les étapes suivantes :
a) le préchauffage d'une matière minérale dans un préchauffeur,
b) transfert de la matière minérale chauffée dans le préchauffeur vers le réacteur à flux entraîné (10),
c) traitement thermique de la matière minérale dans un réacteur à flux entraîné (10) dans une atmosphère réductrice pour réduire les composés métalliques colorants pendant le traitement thermique,
d) séparer le mélange solide/gazeux provenant du réacteur à flux entraîné (10) dans un appareil de séparation (20),
**caractérisé par le fait que** le procédé comprend en outre les étapes suivantes :
e) oxyder les constituants réducteurs du gaz provenant de l'appareil de séparation (20) dans une zone de traitement thermique (30) entre la sortie du flux de gaz de l'appareil de séparation (20) et l'entrée du flux de gaz du préchauffeur au moyen de l'oxygène fourni (320),
f) fournir le gaz sortant de la zone de traitement thermique (30) au préchauffeur et utiliser ainsi l'énergie thermique récupérée dans la zone de traitement thermique (30), en la transférant à la matière minérale.

2. Procédé selon la revendication 1, **caractérisé par le fait que** l'oxydation à l'étape e) a lieu à une température de 700°C à 1000°C et sur une période de 1 s à 10 s.

3. Procédé selon l'une des revendications 1 et 2, **caractérisé par le fait qu'**à l'étape e), un combustible (310) est fourni au gaz.

4. Procédé selon l'une des revendications 1 à 3, **caractérisé par le fait que le** flux de matière minérale est guidé autour de la zone de traitement thermique (30).
